# EUROPEAN PATENT APPLICATION

(11) **EP 1 306 777 A2**
(43) Date of publication of application: **02.05.2003**
(21) Application number: 02022890.4
(22) Date of filing: 14.10.2002
(51) Int. Cl.: G06F 17/30

(54) **Contents conversion system, automatic style sheet selection method and program thereof**

(30) Priority: 26.10.2001 JP 2001329051
(71) Applicant: NEC CORPORATION, Tokyo (JP)
(72) Inventor: Ito, Naoki, Tokyo (JP); Manabe, Kazuhisa, NEC Informatec Systems, Ltd., Kawasaki-shi, Kanagawa (JP); Tachikawa, Tsuneo, NEC Informatec Systems, Ltd., Kawasaki-shi, Kanagawa (JP)
(74) Representative: Baronetzky, Klaus, Dipl.-Ing.

(57) **Abstract**

The contents conversion system of this invention comprises a style sheet storage means for storing a plurality of style sheets and an XML document storage means for storing XML documents for which the style sheet specifications are undefined, that selects a style sheet from the style sheet storage means, based on an XML document identified from the XML document storage means as the XML document required in relation to a contents request from client system and based on circumstance information of the client system from which the contents request is received and on the identified XML document.

## Description

### BACKGROUND OF THE INVENTION

### 1. Field of the Invention

The present invention relates to a contents conversion system that dynamically selects a style sheet for an XML document and converts the contents, a method for automatically selecting a style sheet and a program for the system and method.

### 2. Description of Related Art

A style sheet is used when creating a web site to register, as one batch, the style that sets the format of the page and characters. Presently, style sheet specifications like XSLT (Extensible Style Sheet Language Transformations) for XML (Extensible Markup Language) documents are statically described in an XML document through the ASSX (Associating Style Sheets with XML documents) method. Automatic selection and contents conversion of multiple style sheets for each client is difficult.

Further, while it is possible, using the ASSX method, to switch to a style sheet on a browser running on a client system based on media attributes, there are problems arising from inability to exercise detailed control and from inoperability where a browser is not compatible with ASSX methods.

In JP2000-259640A, it is disclosed an example of prior art in the field of the present invention, wherein a structured document is combined with a plurality of style sheets so that the document, which provides a service, can be structured itself, updating of the document can be performed by modification of a single part, screen display can be generated automatically and customized, and creators are not required to create excessive new style sheets.

In JP2001-195296A, it is discloses a system for converting search results of a directory server to HTML or XML + XSL (data formats that can be handled by a browser) based on client information.

In JP2001-236202A, it is disclosed to select a style sheet in relation to display capabilities of a client, where a plurality of style sheets having differing parameters for font, or display or non-display of an image, are available.

In JP2001-273228A, it is disclosed a document output system which outputs documents like a web page for example, dynamically.

However, in the disclosure of JP2000-259640A, it is assumed that a client system is capable of receiving structured documents and style sheets. On this point, with the present invention, there is no necessity for a style sheet to be processed by a client system. Further, there is no description concerning the method for selecting a required style sheet in JP2000-259640A while the present invention includes a method for utilizing information that forms the keys for selecting a required style sheet.

Further, in the disclosure of JP2001-259640A, it is envisaged that the user selects a required style sheet and adds changes. Accordingly, even if the disclosure of JP2000-259640A were combined with that of JP2001-273228A, it would not be possible for selection of a style sheet to be performed automatically at the server side.

Moreover, in the disclosure of JP2000-259640A, a style sheet must be associated for each structured document, so if for example style sheet A is changed to style sheet B associations for all structured documents that use style sheet A must be re-written. In contrast to this, because with the present invention information concerning associations of documents and style sheets is managed completely separately, changing style sheet A to style sheet B can be completed simply by changing the association information (style sheet DB).

Furthermore, in the disclosure of JP2001-195296A, it can be distinguish between HTML and XML + XSL only so that it can not apply different XSL to individual terminal. According to the configuration shown in FIG. 2 of JP2001-195296A, expanded output variation is not easily achieved. In contrast to this, with the present invention expanded variation of output can be achieved simply by addition of a style sheet.

Moreover, in the disclosure of JP2001-236202A, style sheets are selected only for display capability or screen size so that styles can not be changed for other attributes of a terminal, such as memory size, line speed etc.

### SUMMARY OF THE INVENTION

According to the present invention, style sheet application processes are performed from a server so even where a client is not responsive to a style sheet a document using that style sheet can still be displayed. Further, it is notable that there is no necessity to embed style sheet related information in the document. There is no suggestion in any the above-mentioned published applications of dealing with these points.

In view of the above issues, the object of the present invention is to provide a contents conversion system that enables automatic switching of a style sheet at the server side using client system information, a method for automatic style sheet selection and a program for the system and method.

To achieve these objectives, the contents conversion system of this invention comprises a style sheet storage means for storing a plurality of style sheets, an XML document storage means for storing XML documents for which the style sheet specifications are undefined, a conversion request reception means for identifying from the XML document storage means, an XML document required in relation to a contents request from a client system and a style sheet selection means for selecting a style sheet from the style sheet storage means based on circumstance information of the client system from which the conversion request reception means has received the contents request and on the identified XML document.

In this configuration, it is preferable to further comprise a style sheet conversion means for converting an XML document using a style sheet selected by the style sheet selection means.

The contents conversion system of this invention may further comprise a style sheet association means for embedding in an XML document, association information for a style sheet selected by the style sheet selection means.

On the above configuration, the style sheet selection means should preferably select, from the style sheet storage means, a style sheet that satisfies the document type, root element name and root element attribute name declared in the XML document together with their corresponding values and also satisfies requirements of the client system indicated by the circumstance information of that client system.

The style sheet automatic selection method of this invention comprises a conversion request reception step for identifying, from an XML document storage part storing XML documents for which the style sheet specifications are undefined, an XML document required in relation to a contents request from a client system, and a style sheet selection step for selecting a style sheet from the style sheet storage part storing a plurality of style sheets, based on circumstance information of the client system from which the contents request has been received through the conversion request reception step and on the identified XML document.

This method should preferably comprise a style sheet conversion step for converting the XML document using the style sheet selected through the style sheet selection step.

The style sheet automatic selection method of this invention may further comprise a style sheet association step for embedding in the XML document, association information for the style sheet selected through the style sheet selection step.

For the above method, the style sheet selection step should preferably select, from the style sheet storage part, a style sheet that satisfies the document type, root element name and root element attribute name declared in the XML document together with their corresponding values and also satisfies requirements of the client system indicated by the circumstance information of that client system.

A conversion request reception process for identifying an XML document required in relation to a contents request from client system, from the XML document storage part storing XML documents for which the style sheet specifications are undefined, and a style sheet selection process for selecting a style sheet from the style sheet storage part storing a plurality of style sheets, based on circumstance information of the client system from which the contents request has been received through the conversion request reception process and on the identified XML document, can be executed by a computer.

It is further preferable for a style sheet conversion process for converting an XML document using a style sheet selected through the style sheet selection process to be executed by the computer.

A style sheet association process for embedding in an XML document, association information for a style sheet selected through the style sheet selection process, can also be executed by the a computer.

In the style sheet selection process, it can select, from the style sheet storage part, a style sheet that satisfies the document type, root element name and root element attribute name declared in an XML document together with their corresponding values and also satisfies requirements of the client system indicated by the circumstance information of that client system.

### BRIEF DESCRIPTION OF THE DRAWINGS

Specific embodiments of the present invention will now be described, by way of example only, with reference to the accompanying of drawings in which:
FIG. 1 shows a system comprised of a contents conversion system and a plurality of client systems according to an embodiment of this invention;
FIG. 2 shows an example of a contents conversion request from a client system according to the embodiment of this invention;
FIG. 3 shows an example of a data management table in a client system information DB according to the embodiment of this invention;
FIG. 4 shows an example of a description for a "DOCTYPE" declaration in XHTML Basic;
FIG. 5 shows an example of a data management table in a style information DB according to the embodiment of this invention; and
FIG. 6 shows an example of an XML document in which style sheet association information is embedded according to the embodiment of this invention.

### DETAILED DESCRIPTION OF THE PREFERRED EMBODIMENTS

An embodiment of this invention will now be described with reference to the accompanying drawings.

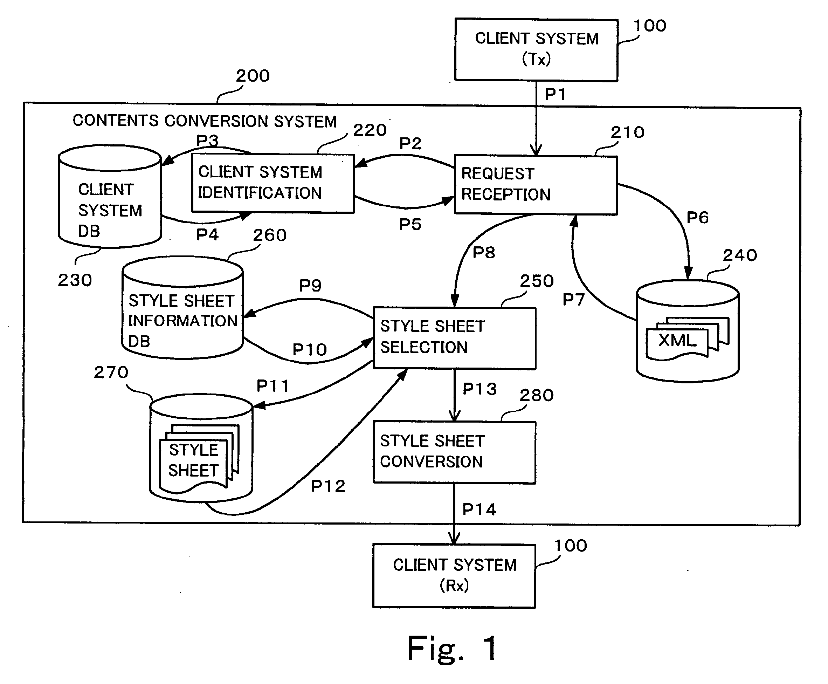

FIG. 1 shows a system comprised of a contents conversion system and a plurality of client systems according to an embodiment of this invention. Contents conversion system 200 performs contents conversion using a style sheet file such as an XML document or XSLT.

Contents conversion system 200 is comprised of conversion process request reception part 210, client system identification part 220, client system database 230, XML document storage part 240, style sheet selection processing part 250, style sheet information database 260, style sheet storage part 270 and style sheet conversion execution part 280.

Conversion process request reception part 210 receives a conversion request from client system 100. Client system identification part 220 identifies client system 100 that originated the conversion request. Style sheet selection processing part 250 selects a style sheet automatically. Style sheet conversion execution part 280 coordinates an XML document and the style sheet file and performs contents conversion. Part 280 does not need to perform this conversion when client system 100 is capable of using XML.

Client system information database 220 stores information concerning client system. Style sheet information database 260 stores information concerning style for style sheets. The information of these databases is set in advance by a system manager. XML document storage part 240 stores XML documents for which the style sheet specifications are undefined. Style sheet storage part 270 stores style sheets.

Client system 100 would in principle be a browser running on something like a mobile telephone, PDA (Personal Digital Assistant) or PC (Personal Computer), however if the device used is capable of transmitting and receiving using HTTP (Hypertext Transfer Protocol), a browser is not required.

The style sheet automatic selection method according to an embodiment of this invention will now be described with reference to FIG. 1. Firstly, client system (transmission part) 100, using HTTP, makes a request for contents conversion to contents conversion system 200 (P 1). HTTP for the contents conversion request is comprised of request lines and a request header. The request lines specify the method name, URI (Universal Resource Identifier) and the HTTP protocol version. Client system 100 specifies an XML document with URI.

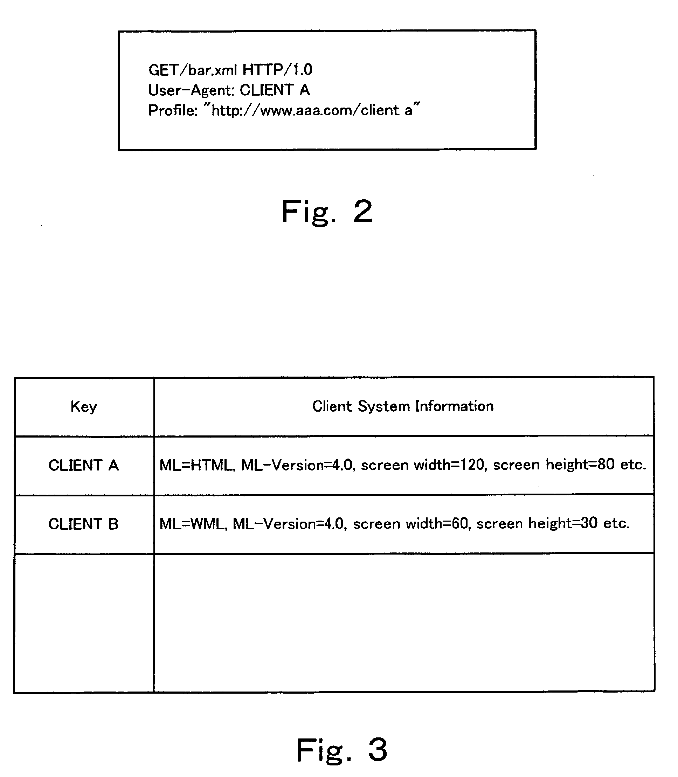

FIG. 2 shows an example of a contents conversion request. The first line, "GET/bar.xml HTTP/1.0" is the request line. The second and third lines of HTTP request header include information like "User-Agent", "Accept-Language", "Profile of CC/PP HTTPEX(CC/PP exchange protocol based on HTTP Extension Framework" or else.

Next, conversion processing request part 210 sends an HTTP request header to client system identification part 220 (P 2). Part 220 sends the profile or user-agent of the HTTP request header to client system information database 230 (P 3).

Client system information database 230 searches client system information by using the profile or user-agent of the HTTP request header as a key and sends the retrieved client system information to client system identification part 220 (P 4). FIG. 3 shows an example of a data management table in client system information database 230. The client system information shown in FIG. 3 is information like screen size, ML (Markup Language) and ML version that can be processed by each client system.

Client system identification part 220 sends client system information retrieved from client system information database 230 to conversion process request reception part 210 (P 5). Part 210 defines the XML document file pathname from the HTTP URI transmitted from client system 100, and gives the file path name of the XML document to XML document storage part 240 (P 6).

XML document storage part 240 sends an XML document corresponding to the XML document file path name to conversion process request reception part 210 (P 70). Part 210 sends client system information acquired from client system identification part 220 and the XML document acquired from part 240 to style sheet selection processing part 250 (P 8).

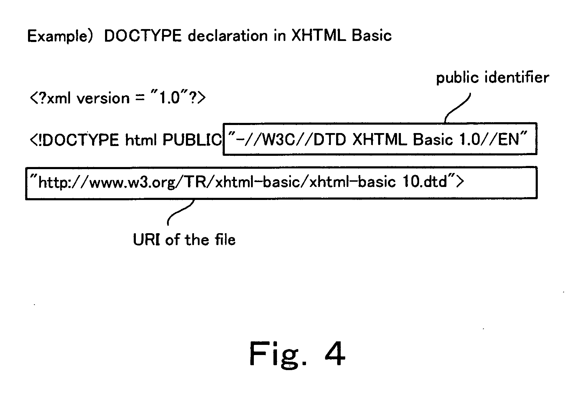

Style sheet selection processing part 250 acquires from the XML document, document identifiers like public identifiers for "DOCTYPE" declaration of DTD (Document Type Definition) or system identifiers, as well as the file URI, root element name and root element attribute name and their values. In FIG. 4, a description of "DOCTYPE" declaration in XHTML (Extensible Hypertext Markup Language) Basic is provided as an example of a document's public identifier. The public identifier is shown in the portion enclosed in a rectangle starting from part way along the second line. The third line of that figure shows the file URI.

Next, style sheet selection processing part 250 sends to style information data base 260 the document identifiers, file URI, MS and MS version (P 9). Database 260 search the database by using the document identifiers, file URI, MS and MS version as keys and sends the retrieved file path of the style sheet to part 250 (P 10).

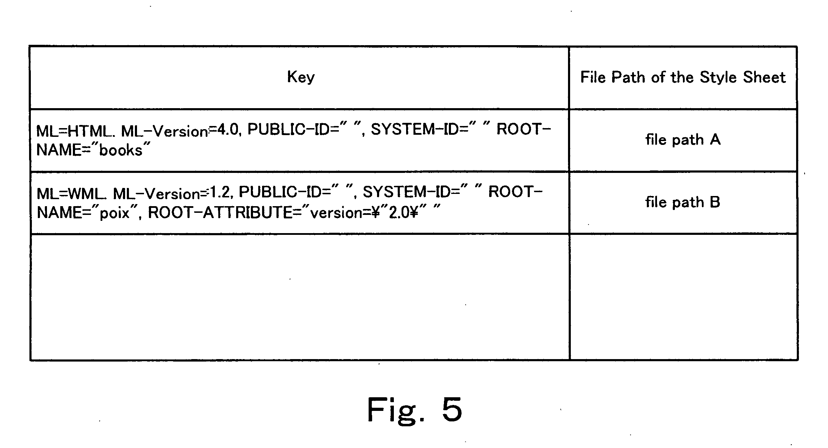

FIG. 5 shows an example of a data management table in style information database 260. For this table the key items are MS, MS version, and the "PUBLIC-ID", "SYSTEM-ID", root name, root attribute name and their values that identify the document type of the XML document. Database 260 searches and specifies the file path of the style sheet of which ML can be used on that client system 100 and which can be applied for the document type of that XML document.

Style sheet selection processing part 250 sends the file path of the style sheet to style sheet storage part 270 (P 11). Part 270 sends the style sheet information to style sheet selection processing part 250 (P 12).

Style sheet selection processing part 250 sends the XML document and style sheet information to style sheet conversion execution part 280 (P 13). Part 280 performs a general contents conversion based on the XML document and style sheet information and transmits the converted contents to client system (reception part) 100. If client system 100 is XML compatible however, the contents can be transmitted to system 100 without requiring conversion.

The style sheet automatic selection method of this invention can be executed through executing a program on a computer. The required program can be provided by recording it to an optical recording medium, a magnetic recording medium, a magneto-optical recording medium or a semiconductor IC recording medium. Again, the program may be furnished by downloading it from a program server through FTP (file transfer protocol).

The description above shows an example of a suitable embodiment for exercising this invention but is not to be taken as limiting the scope of embodiments that are possible without deviating from the gist of this invention.

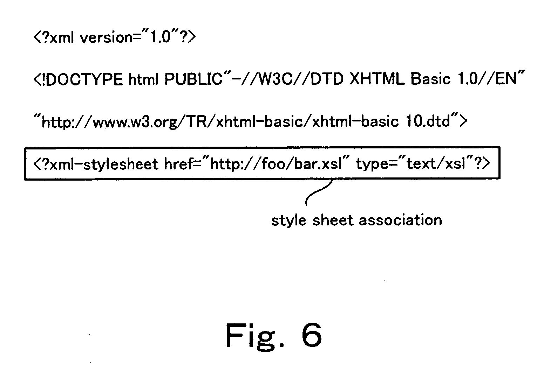

For example, it is conceivable that processes of style sheet execution part 280 shown in FIG. 1 not be performed inside contents conversion system 200, but the XML document is instead transmitted directly to client system 100. Here, after style sheet association information (ASSX) is embedded inside the XML document that document is transmitted to client system 100. FIG. 6 shows an example of a description where style sheet association information is embedded in an XML document. The fourth line describes style sheet association.

As clearly described above, according to this invention, a style sheet can be automatically switched in relation to 1 XML document in response to information on the environment of client system. This makes it possible to implement a change of display format or convert to another ML at the server side for each different client system.

Furthermore, this obviates the need for statically describing a style sheet in an XML document, thereby enabling the XML document to be displayed on a browser of client system not compatible with the style sheet.

Moreover, as a style sheet is applied for an XML document in advance and contents output, an XML document can be displayed even on a browser not compatible with that style sheet.

## Claims

1. A contents conversion system comprising;
a style sheet storage means for storing a plurality of style sheets;
an XML document storage means for storing XML documents for which the style sheet specifications are undefined;
a conversion request reception means for identifying, from said XML document storage means, an XML document required in relation to a contents request from client system; and
a style sheet selection means for selecting a style sheet from said style sheet storage means based on circumstance information of the client system from which the conversion request reception means has received the contents request and on the identified XML document.

2. The contents conversion system according to claim 1 comprising a style sheet conversion means for converting said XML document using a style sheet selected through said style sheet selection means.

3. The contents conversion system according to claim 1 comprising a style sheet association means for embedding in said XML document association information for the style sheet selected by said style sheet selection means.

4. The contents conversion system according to any of claims 1 through 3 wherein said style sheet selection means selects from said style sheet storage means, a style sheet that satisfies the document type, root element name and root element attribute name declared in said XML document together with their corresponding values and also satisfies requirements of said client system indicated by the circumstance information of that client system.

5. A style sheet automatic selection method comprising:
a conversion request reception step for identifying, from an XML document storage part storing XML documents for which the style sheet specifications are undefined, an XML document required in relation to a contents request from client system, and
a style sheet selection step for selecting a style sheet from the style sheet storage part storing a plurality of style sheets, based on circumstance information of the client system from which the contents request has been received through the conversion request reception step and on the identified XML document.

6. The style sheet automatic selection method according to claim 5 comprising a style sheet conversion step for converting said XML document using a style sheet selected through said style sheet selection step.

7. The style sheet automatic selection method according to claim 5 comprising a style sheet association step for embedding in an XML document, association information for the style sheet selected through said style sheet selection step.

8. The style sheet automatic selection method according to any of claims 5 through 7 that selects, from said style sheet storage part, a style sheet that satisfies the document type, root element name and root element attribute name declared in said XML document together with their corresponding values and also satisfies requirements of said client system indicated by the circumstance information of that client system.

9. A style sheet automatic selection program that can be read-in by a computer for executing;
a conversion request reception process for identifying, from an XML document storage part storing XML documents for which the style sheet specifications are undefined, an XML document required in relation to a contents request from client system, and
a style sheet selection process for selecting a style sheet from a style sheet storage part storing a plurality of style sheets based on circumstance information of the client system from which the contents request has been received through the conversion request reception process and on the identified XML document.

10. The style sheet automatic selection program according to claim 9 for further executing style sheet conversion process for converting said XML document using a style sheet selected through said style sheet selection process.

11. The style sheet automatic selection program according to claim 9 for further executing style sheet association process for embedding in said XML document, association information for a style sheet selected through said style sheet selection process.

12. The style sheet automatic selection program according to any of claims 9 through 11 wherein said style sheet selection process selects from said style sheet storage part, a style sheet that satisfies the document type, root element name and root element attribute name declared in said XML document together with their corresponding values and also satisfies requirements of said client system indicated by the circumstance information of that client system.
